# EUROPÄISCHE PATENTANMELDUNG

(11) **EP 1 762 129 A1**
(43) Veröffentlichungstag der Anmeldung: **14.03.2007**
(21) Anmeldenummer: 06011697.7
(22) Anmeldetag: 07.06.2006
(51) Int. Cl.: A01B 69/00

(54) **Lenksystem eines Fahrzeugs**

(30) Priorität: 31.08.2005 DE 102005041550
(71) Anmelder: AGROCOM GmbH & Co. Agrarsystem KG, 33719 Bielefeld (DE)
(72) Erfinder: Kitzler, Christian, 49661 Cloppenburg (DE); Autermann, Ludger, 48317 Drensteinfurt (DE); Quinckhardt, Michael, Dr., 48231 Warendorf (DE)
(74) Vertreter: Ellerbrächter, Dirk

(57) **Zusammenfassung**

Die Erfindung betrifft ein Lenksystem eines Fahrzeugs (1) mit Spurführungssystem (24) zur Ermittlung einer Fahrtroute (20) und das Spurführungssystem (24) über zumindest eine Datenverarbeitungseinrichtung (16, 27, 31) eine automatische Lenkung des Fahrzeugs (1) bewirkt, wobei das Spurführungssystem (24) zumindest ein erstes Fahrtroutendetektionssystem (23) und wenigstens ein weiteres Fahrtroutendetektionssystem (25) umfasst und die Fahrtroutendetektionssysteme (23, 25) über zumindest eine Datenverarbeitungseinrichtung (16, 27, 31) in der Weise gekoppelt sind, dass zwischen den Fahrtroutendetektionssystemen (16, 27, 31) umgeschaltet werden kann. Auf diese Weise wird sichergestellt, dass das Spurführungssystem (24) auch bei wechselnder Struktur der zu bearbeitenden Territorien (35) eine hohe Arbeitsqualität ermöglicht.

## Beschreibung

Die Erfindung betrifft ein Lenksystem eines Fahrzeugs mit Spurführungssystem nach dem Oberbegriff des Anspruchs 1.

Der Einsatz von sogenannten Spurführungssystemen in Fahrzeugen, wie etwa in Landmaschinen, zur voll- oder teilautomatischen Führungen dieser Fahrzeuge an charakteristischen virtuellen oder realen Linien hat wegen der weitgehenden Entlastung des Fahrzeugführers von zum Teil großes Geschick erfordernden Lenkvorgängen erhebliche praktische Bedeutung. Neben den seit langem eingesetzten mechanischen Spurführungssystem, die in der Regel über mechanische Taster charakteristische Linien in dem zu bearbeitenden Territorium abtasten und aus den erkannten Konturen Lenksignale generieren, die das jeweilige Fahrzeug entlag dieser detektierten Kontur führen. Da derartige Systeme nur in einem sehr geringen Umfang das vor dem Fahrzeug liegende Territorium abtasten können, werden diese Systeme zunehmende durch elektronische Systeme ersetzt, die in der Regel auch weit vor dem Fahrzeug das zu bearbeitende Territorium sensieren können. Mittels derartiger Systeme kann wegen der Fähigkeit des weit vorausschauenden Detektierens des zu bearbeitenden Territoriums sehr viel besser die Trägheit der jeweiligen Lenksysteme berücksichtigt werden.

Im Bereich der elektronischen Fahrtroutendetektionssysteme sind GPS-basierte Systeme weit verbreitet. Beispielhaft sei hier auf die DE 101 29 135 A1 verwiesen in der am Beispiel eines Mähdreschers eine sogenannte GPS-Lenkung offenbart ist. GPS-basierte Einrichtungen zur Positionsbestimmung haben jedoch den Nachteil, dass insbesondere durch Laufzeitfehler des GPS-Signals oder Empfangsstörungen verursachte Signalverfälschungen zu erheblichen Störungen in der automatischen Lenkung des Fahrzeugs führen können. Dies kann unter Umständen dazu führen, dass das Fahrzeug aus der eigentlich abzuarbeitenden Spur herausgelenkt wird, sodass sich die Arbeitsqualität des Fahrzeugs erheblich verschlechtert. Um diese Nachteile einzuschränken, wird in der DE 101 29 135 vorgeschlagen, das GPS-basierte Fahrtroutendetektionssystem mit einem weiteren Fahrtroutendetektionssystem, etwa einem Laserabtastsystem oder einem Bildverarbeitungssystem zu koppeln. Die von den jeweiligen Systemen generierten Positionssignale werden dann in einer Steuer- und Auswerteinheit in Relation zueinander gebracht und ein Entscheidungsalgorithmus beurteilt die Qualität der Signale und liefert in Abhängigkeit von der Wichtung der Qualitätsinformationen ein korrigiertes Positionssignal. Ein solches System hat vor allem den Nachteil, dass es stets an die Positionsdaten zweier Fahrtroutendetektionssysteme gekoppelt ist. Fällt eines oder fallen beide Positionssignale aus, dann wird ein Ersatzpositionssignal generiert, was mitunter erheblich von der tatsächlichen Position des Fahrzeugs abweichen kann. Diese Abweichung wird um so größer sein, je schlechter die Qualität der empfangenen Positionssignale der einzelnen Fahrtroutendetektionssysteme ist.

Ein derartiges Zusammenspiel von mehreren Fahrtroutendetektionssystem berücksichtigt auch nicht, dass bei Vorhandensein von ausgeprägten optischen Bezugslinien im zu bearbeitenden Territorium unmittelbar das Territorium sensierende Fahrtroutendetektionssysteme genauere Positionsdaten als GPS-basierte Systeme bereitstellen, da sie unmittelbar die wirklichen Verhältnisse in dem Territorium wiedergeben. In einer Ausführung nach DE 101 29 135 werden diese Positionssignale nur zur Korrektur der GPS-basierten Positionsdaten herangezogen.

Da eine Vielzahl von Anwendungsfällen eine präzise Wiedergabe der tatsächlichen geographischen Bedingungen in einem zu bearbeitenden Territorium erfordern, sind aus dem Stand der Technik, wie etwa der DE 103 28 395 Systeme bekannt geworden, die die GPS-basierte Positionsdatenermittlung vollständig durch Kamera-basierte Systeme ersetzt. In dem dargestellten System wird der Fahrweg des als Schlepper ausgeführten landwirtschaftlichen Fahrzeugs mittels einer an dem Schlepper angeordneten Bilderfassungseinrichtung aufgenommen. Die generierten Bilder werden sodann in einer Steuer- und Auswerteinheit mit dort hinterlegten Bilddaten des Soll-Fahrweges verglichen und in Abhängigkeit von dem Vergleich wird dann eine Korrektur des Fahrweges durch Generierung der erforderlichen Lenksignale bewirkt.

Indem das in DE 103 28 395 offenbarte Spurführungssystem das Fahrzeug in analoger Weise zu GPS-basierten Systemen auf einen vorab definierten Fahrweg zwingt, muss dieser Soll-Fahrweg zunächst vorab erstellt werden. Zum anderen kann dieser vorab definierte Fahrweg dann von den realen Bedingung erheblich abweichen, wenn wachstumsbedingt ein optimales, pflanzenschonendes Überfahren des Territoriums ein von dem vordefinierten Fahrweg abweichendes Befahren des Territoriums erfordern würde. In einem solchen Fall käme es dann auch zur Überfahrung von Pflanzenbeständen und damit verbunden Ertragseinbusen. Mithin ergeben sich für derartige Systeme die gleichen Nachteile wie für GPS-basierte Systeme, da mit einem System nach der DE 103 28 395 strukturell ein GPS-basiertes System nachgebildet wird.

Es ist deshalb Aufgabe der Erfindung, die beschriebenen Nachteile des Standes der Technik zu vermeiden und insbesondere eine automatische Lenkung für Fahrzeuge mit Spurführungssystemen vorzuschlagen, die auch bei wechselnder Struktur der zu bearbeitenden Territorien eine hohe Arbeitsqualität sicherstellt.

Diese Aufgabe wird erfindungsgemäß durch die kennzeichnenden Merkmale des Anspruchs 1 gelöst.

Indem das Spurführungssystem zumindest ein erstes Fahrtroutendetektionssystem und wenigstens ein weiteres Fahrtroutendetektionssystem umfasst und wobei die Fahrtroutendetektionssysteme über eine Steuereinheit in der Weise gekoppelt sind, dass zwischen den Fahrtroutendetektionssystemen umgeschaltet werden kann wird sichergestellt, dass das Spurführungssystem auch bei wechselnder Struktur der zu bearbeitenden Territorien eine hohe Arbeitsqualität ermöglicht.

Eine technisch ausgereifte und universell einsetzbare Ausführung des Spurführungssystems ergibt sich dann, wenn das erste Fahrtroutendetektionssystem ein GPS-basiertes Fahrtroutendetektionssystem ist. Ein derartiges System hat insbesondere den Vorteil, das es relativ unabhängig von Staubaufwirbelungen während des Einsatzes der Arbeitsmaschine ist und sehr präzise Positionsdaten der Arbeitsmaschine liefert.

Damit das erfindungsgemäße Spurführungssystem universell einsetzbar ist wird das zweite Fahrtroutendetektionssystem von einem Kamera-basierten Fahrtroutendetektionssystem gebildet. Dies hat insbesondere den Vorteil, dass eine automatische Lenkung der Arbeitsmaschine auch dann möglich wird, wenn für das zu bearbeitende Territorium keine digitalisierten Fahrtrouten vorliegen oder in einem aufwachsenden Bestand eine sehr präzise Spurführung der Arbeitsmaschine zur Vermeidung von Pflanzenbeschädigungen erforderlich ist.

In vorteilhafter Weiterbildung der Erfindung ist die Kamera des Kamera-basierten Fahrtroutendetektionssystem als 3-D-Kamera ausgebildet, sodass eine räumliche Abbildung des zu bearbeitenden Territoriums und darauf aufbauend Fahrspuren für das Arbeitsfahrzeug generierbar sind.

Eine konstruktiv ausgereifte Ausführung der 3-D-Kamera ergibt sich dann, wenn die 3-D-Kamera aus einem winkelversetzt angeordnetem Zwei-Kamera-System oder einer 2-D-Kamera mit Laufzeitmessung gebildet wird.

Da Kamera-basierte Fahrtroutendetektionssysteme dann eine präzisere Spurführung ermöglichen, wenn die Fahrtroute des Fahrzeugs sehr speziell an die konkreten örtlichen Bedingungen in dem zu bearbeitenden Territorium angepasst werden muss, ist in einer vorteilhaften Ausgestaltung der Erfindung vorgesehen, dass an Hand von Regelkriterien und/oder durch den Betreiber ein Umschalten zwischen den Fahrtroutendetektionssystemen möglich ist.

Im einfachsten Fall werden die Regelkriterien vom Vorhandensein oder Fehlen von optischen Bezugslinien in dem zu bearbeitenden Territorium gebildet, wobei die optischen Bezugslinien Fahrgassen und/oder Pflanzenreihen und/oder Bestandskanten sein können.

Eine hohe Flexibilität einer automatischen Spurführung sowie eine hohe Arbeitsqualität des Fahrzeugs wird dann erreicht, wenn beim Vorhandensein von optischen Bezugslinien und/oder dem Fehlen digitalisierter Fahrtrouten in dem zu bearbeitenden Territorium das Spurführungssystem über das die Kamera umfassende Fahrtroutendetektionssystem betrieben wird.

In vorteilhafter Weiterbildung der Erfindung kann die automatische Steuerung einer landwirtschaftlichen Arbeitsmaschine in zu bearbeitenden Territorien, in welchen Überrollungen des Bestandes keine Rolle spielen dann sehr effizient betrieben werden, wenn beim Fehlen von optischen Bezugslinien und/oder der Verfügbarkeit von digitalisierten Fahrtrouten in dem zu bearbeitenden Territorium das Spurführungssystem über das GPS-basierte Fahrtroutendetektionssystem betrieben wird.

Eine besonders einfache Integration des erfindungsgemäßen Spurführungssystems in ein Fahrzeug ergibt sich dann, wenn das GPS-basierte Fahrtroutendetektionssystem und das die Kamera umfassende Fahrtroutendetektionssystem über ein Controller miteinander verknüpft sind und der Controller die Fahrtroutendetektionssysteme mit einem Lenkregelkreis verknüpft.

Eine erhebliche Entlastung des Fahrers des landwirtschaftlichen Arbeitsfahrzeugs wird dann erreicht, wenn der Controller die Regelkriterien zur Auswahl des Fahrtroutendetektionssystems definiert. Dann nämlich könnte der Spurführungsprozess weitgehend automatisiert werden, sodass sich der Fahrer der landwirtschaftlichen Arbeitsmaschine auf die Überwachung der verschiedensten Arbeitsprozesse konzentrieren kann.

Eine kompakte Bauweise der Steuerelektronik des erfindungsgemäßen Spurführungssystems wird erreicht, indem der Controller aus den Ausgangssignalen der Fahrtroutendetektionssysteme unmittelbar die Eingangssignale für den Lenkregelkreis generiert.

Um Kamera-basiert ermittelte Fahrtrouten für nachfolgende Bearbeitungsschritte reproduzierbar zu machen kann in einer vorteilhaften Ausgestaltung der Erfindung vorgesehen sein, dass das Kamera-basierte Fahrtroutendetektionssystem mit dem GPS-basierten Fahrtroutendetektionssystem in der Weise verknüpft ist, dass beim Betrieb des Fahrzeugs mittels des Kamera-basierten Fahrtroutendetektionssystems eine geo-referenzierte Aufzeichnung der Fahrstrecke unter Einbeziehung des GPS-basierten Fahrtroutendetektionssystem erfolgt

Ein universeller Einsatz des erfindungsgemäßen Spurführungssystems wird in vorteilhafter Weiterbildung der Erfindung dann erreicht, wenn das Spurführungssystem modular aufgebaut ist und die Fahrtroutendetektionssysteme austauschbar in das Spurführungssystem integriert sind

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht eines Fahrzeugs mit erfindungsgemäßer Lenkeinrichtung
- Figur 2: zwei Anwendungsfälle des erfindungsgemäßen Spurführungssystems
- Figur 3: eine Detailansicht des generierten dreidimensionalen Bildes des zu bearbeitenden Territoriums
- Figur 4: ein Flussdiagramm zur Veranschaulichung des Zusammenhangs zwischen Regelkriterien, optischen Bezugslinien und vordefinierten Fahrtrouten

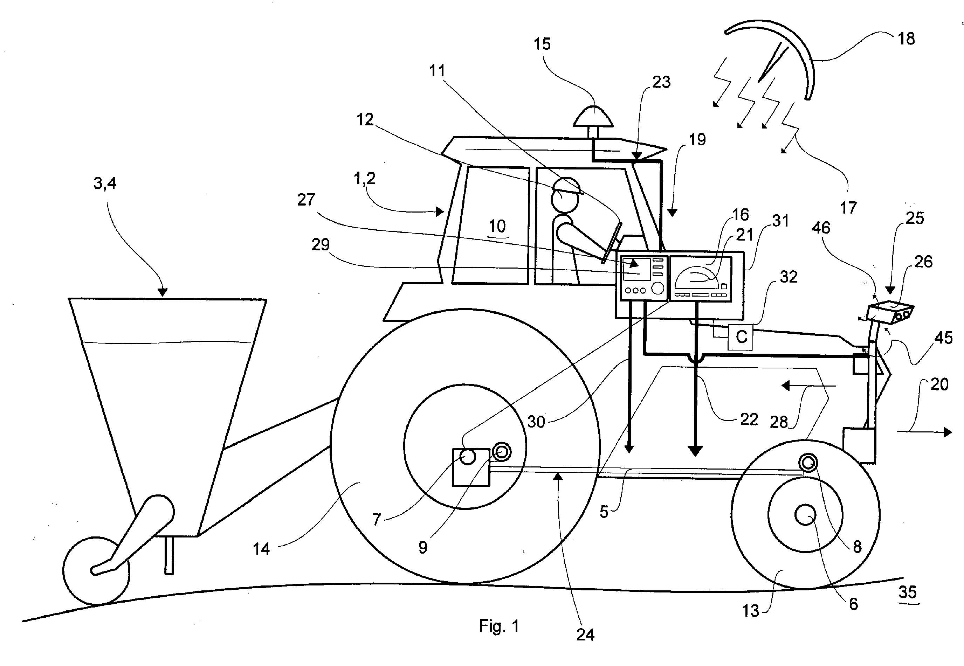

Fig. 1 zeigt eine als Schlepper 2 ausgeführte landwirtschaftliche Arbeitsmaschine 1 der in ihrem rückwärtigen Bereich ein als Düngerstreuer 4 ausgeführtes Bearbeitungsgerät 3 angekoppelt ist. Es liegt im Rahmen der Erfindung, dass das Bearbeitungsgerät 3 beliebig ausgeführt und an beliebiger Stelle an dem Trägerfahrzeug 1 adaptiert sein kann. Beispielhaft sei hier darauf verwiesen, dass das Bearbeitungsgerät 3 auch als Grubber, Vertikutiermaschine, Herbizitspritze oder beispielsweise als ein an verschiedenen Positionen dem Schlepper zugeordnetes ein- oder mehrteiliges Mähwerk ausgeführt sein kann.

Der an sich bekannte Schlepper 2 verfügt über einen hydraulischen Lenkkreislauf 5, der in an sich bekannter Weise mit der Vorderachse 6 und/oder der Hinterachse 7 und/oder den Rädern 13, 14 zugeordneten Lenkzylindern 8, 9 in Wirkverbindung steht. Über das in der Fahrzeugkabine 10 angeordnete Lenkrad 11 kann der Fahrer 12 des Schleppers 2 in konventioneller Weise die Druckbeaufschlagung der Lenkzylinder 8, 9 regeln und somit eine Lenkung des Schleppers 2 bewirken, wobei je nach Ausführungsform des Lenkkreislaufs 5 nur die Räder 13 der Vorderachse 6, die Räder 13, 14 einer Fahrzeugachse 6, 7 gemeinschaftlich oder jedes Rad 13, 14 separat lenkbar sind.

Der Schlepper 2 verfügt kabinendachseitig über einen sogenannten GPS-Sensor 15, der unter Koppelung an eine Datenverarbeitungseinheit 16 aus den Positionssignalen 17 von GPS-Satellitensystemen 18 GPS-basierte Positionssignale 19 des Schleppers 2 generiert. In an sich bekannter Weise können diese Positionssignale 19 des Schleppers 2 zur Aufzeichnung der von dem Schlepper 2 zurückgelegten Fahrtroute 20 herangezogen werden. Eine GPS-basierte automatischen Lenkung des Schleppers 2 ist konventionell so ausgeführt, dass die GPS-basiert ermittelte. Fahrtroute 20 des Schleppers 2 im einfachsten Fall mit einer in der Datenverarbeitungseinheit 16 hinterlegten Soll-Fahrspur 21 verglichen wird. Weicht die ermittelte Fahrtroute 20 von der Soll-Fahrspur 21 ab, werden in der Datenverarbeitungseinheit 16 Lenksignale 22 generiert, die automatisch in den Lenkkreislauf 5 eingreifen und durch Verstellung der Lenkzylinder 8, 9 eine Anpassung der Ist-Fahrroute 20 an die Soll-Fahrtroute 21 bewirken.

Erfindungsgemäß bilden der GPS-Sensor 15 und die zugehörige Datenverarbeitungseinrichtung 16 ein erstes Fahrtroutendetektionssystem 23 eines Spurführungssystems 24, weiches neben den bereits beschriebenen Komponenten GPS-Sensor 15, Datenverarbeitungseinrichtung 16 und dem Lenkkreislauf 5 über zumindest ein weiteres Fahrtroutendetektionssystem 25 verfügt. Das weitere Fahrtroutendetektionssystem 25 umfasst im dargestellten Ausführungsbeispiel ein dem Schlepper 2 frontseitig zugeordnetes und noch näher zu beschreibendes Bilderkennungssystem 26, welches mit einer Datenverarbeitungseinrichtung 27 in der Weise gekoppelt ist, dass in der Datenverarbeitungseinrichtung 27 die Bildsignale 28 in reale Bilder 29 des aufgenommenen Territoriums 35 umgewandelt und gegebenenfalls angezeigt werden. Weiter generiert die dem Bilderkennungssystem 26 zugeordnete Datenverarbeitungseinrichtung 27 Lenksignale 30 die in analoger Weise zu dem GPS-basierten Fahrtroutendetektionssystem 23 die automatische Lenkung des Schleppers 2 durch automatisches Eingreifen in den Lenkkreislauf 5 bewirken kann. In dem dargestellten Ausführungsbeispiel nach Fig. 1 verfügt jedes Fahrtroutendetektionssystem 23, 25 über eine separate Datenverarbeitungseinrichtung 16, 27. Es liegt im Rahmen der Erfindung, dass beiden Fahrtroutendetektionssystemen 23, 25 eine gemeinsame Datenverarbeitungseinrichtung 31 zugeordnet ist. Je nach Ausführungsform sind den getrennten Datenverarbeitungseinrichtungen 16, 27 oder der gemeinsamen Datenverarbeitungseinrichtung 31 in erfindungsgemäßer Weise ein Controller 32 zugeordnet, der ein Umschalten zwischen den Fahrtroutendetektionssystemen 23, 25 in der Weise ermöglich, dass das Spurführungssystem 24 entweder auf GPS-basierte oder kamera-basierte Positionsdaten zurückgreift, auf deren Basis dann die jeweiligen Lenksignale 22, 30 generiert und an den Lenkkreislauf 5 übermittelt werden.

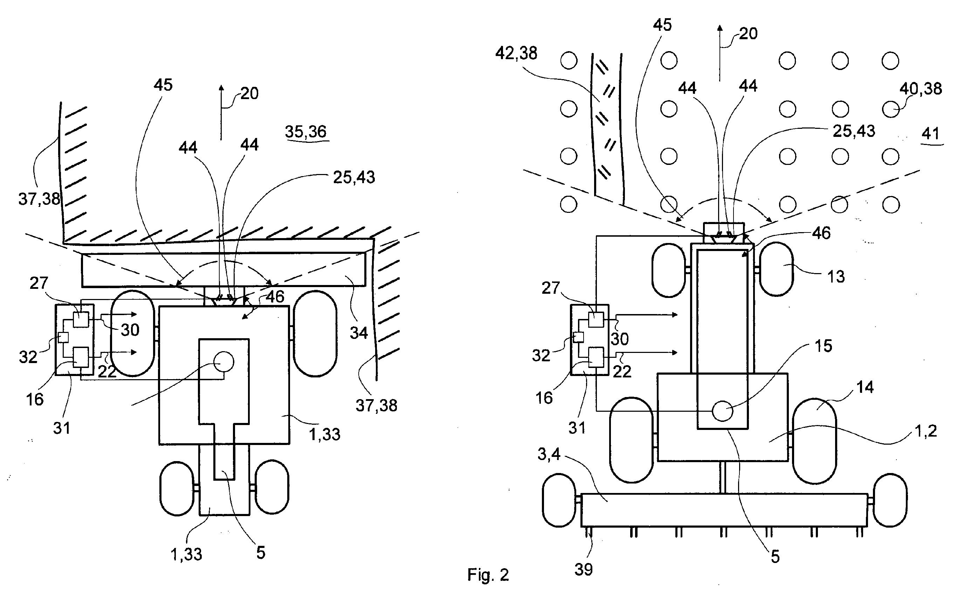

Während das erste Fahrtroutendetektionssystem 23 ein an sich bekanntes und deshalb nicht näher erläutertes GPS-basiertes Fahrtroutendetektionssystem 23 bildet wird das weitere Kamera-basierte Fahrtroutendetektionssystem 25 nachfolgend an Hand Fig. 2 näher erläutert. Fig. 2 zeigt zunächst zwei Anwendungsfälle des erfindungsgemäßen Lenksystems. In der linken Darstellung wird die Arbeitsmaschine 1 von einem Mähdrescher 33 gebildet, dem frontseitig ein Getreideschneidwerk 34 zugeordnet ist, welches ein auf dem zu bearbeitenden Territorium 35 stehenden Getreidebestand 36 erntet und an den Mähdrescher 33 übergibt. Indem der Getreidebestand 36 abgeerntet wird, ergeben sich Bestandkanten 37, die zugleich sogenannte optische Bezugslinien 38 in dem zu bearbeitenden Territorium 35 bilden. In der rechtsseitigen Darstellung ist der in Fig. 1 abgebildete Anwendungsfall in der Draufsicht beschrieben. Das stark vereinfacht dargestellte, als Düngerstreuer 4 ausgebildet Bearbeitungsgerät 3 verfügt über Düngeraustrittselemente 39, die gezielt an einzelne Pflanzenreihen 40 Düngemittel abgeben können. Ein solches System bildet einen typischen Anwendungsfall für das Arbeiten in einem wachsenden Bestand 41, wobei der wachsende Bestand 41 von Mais- und Rübenpflanzenreihen, verschiedensten Gemüsepflanzenreihen, Kartoffeldämmen etc. gebildet werden kann. In derartigen Beständen sind zudem regelmäßig die sogenannten Fahrgassen 42 gut sichtbar. Bei diesem Anwendungsfall bilden die Pflanzenreihen 40 sowie die Fahrgassen 42 die optischen Bezugslinien 38 des in dem zu bearbeitenden Territoriums 35 wachsenden Bestandes 41.

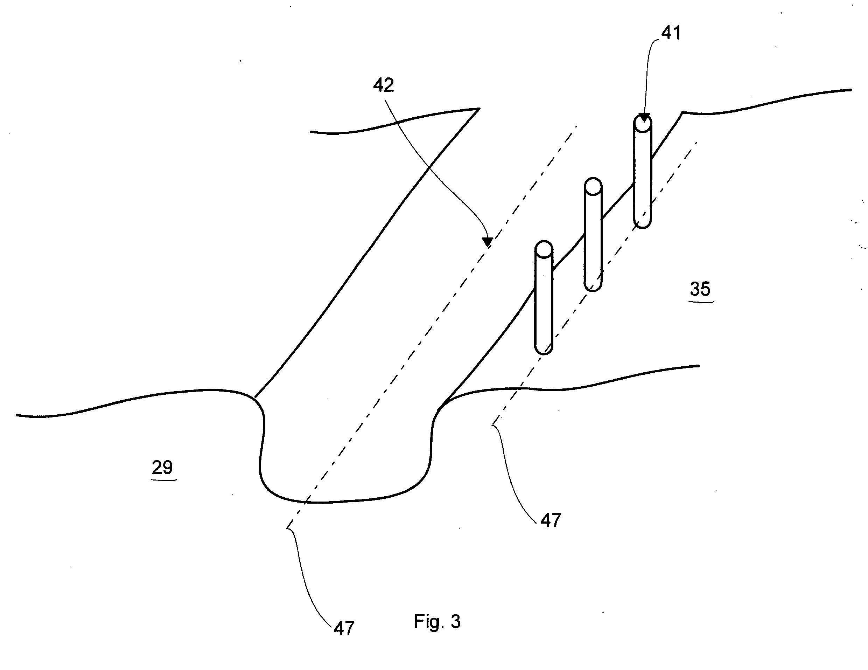

Jede der landwirtschaftlichen Arbeitsmaschinen 1, 2, 33 verfügt über den bereits beschriebenen GPS-Sensor 15 und die diesem jeweils zugeordnete Datenverarbeitungseinrichtung 16, die jeweils an den Lenkkreislauf 5 zu übermittelnde Lenksignale 22 generiert. Zudem verfügt jede Arbeitsmaschine 1, 2, 33 in ihrem frontseitigen Bereich über ein weiteres Fahrtroutendetektionssystem 25, welches ebenfalls über eine Datenverarbeitungseinrichtung 27 ein an den Lenkkreislauf 5 zu übermittelndes Lenksignal 30 generiert. Weiter ist den Datenverarbeitungseinrichtungen 16, 27 ein Controller 32 zugeordnet, der in erfindungsgemäßer Weise ein Umschalten zwischen den beiden Fahrtroutendetektionssystemen 23, 25 ermöglicht. Das Kamera-basierte weitere Fahrtroutendetektionssystem 25 wird in dem dargestellten Ausführungsbeispiel von einer sogenannten 3-D-Kamera 43 gebildet, die in an sich bekannter Weise aus zwei in einem definierten Winkel zueinander angeordneten herkömmlichen Kameras 44 gebildet wird, wobei die Generierung des dreidimensionalen Bildes mittels einer entsprechenden Software ermittelt wird. Die Erstellung des Bildes kann beispielsweise in dem Controller 32 und/oder einer Datenverarbeitungseinrichtung 16, 27, 31 erfolgen. Es liegt im Rahmen der Erfindung, dass die 3-D-Kamera auch von einem Ein-Kamera-System gebildet werden kann, wobei diese Kamera dann so beschaffen ist, dass zugleich die Laufzeit der die Bildpunkte bestimmenden Lichtstrahlen zur Ermittlung der dritten Dimension herangezogen wird. Damit die 3-D-Kamera 43 einen möglichst großen Bildbereich des zu bearbeitenden Territoriums 35 erfassen kann, ist das Kamera-basierte weitere Fahrtroutendetektionssystem 25 gemäß den Pfeilrichtungen 45, 46 in horizontaler und vertikaler Richtung schwenkbar an der jeweiligen landwirtschaftlichen Arbeitsmaschine 1 angeordnet. Je nach Beschaffenheit der 3-D-Kamera und der ihr zugeordneten Bilderkennungssoftware kann gemäß Fig. 3 ein mehr oder weniger realistisches Bild 29 des von der jeweiligen 3-D.Kamera 43 sensierten Territoriums 35 erstellt werden, welches präzise die optischen Bezugslinien 38 des Territoriums 35, im vorliegenden Fall die Fahrgasse 42 und die Pflanzenreihe 40, wiedergibt. Eine geeignete Bilderkennungssoftware kann dann diese optischen Bezugslinien 38 mathematisch in eine Ersatzspurlinie 47 umrechnen, aus der dann das Lenksignal 30 abgeleitet werden kann, welches im Ergebnis dazu führt, dass der Lenkkreislauf 5 so geregelt wird, dass die landwirtschaftliche Arbeitsmaschine 1 zumindest einer eine optische Bezugslinie 38 repräsentierenden Ersatzspurlinie 47 folgt.

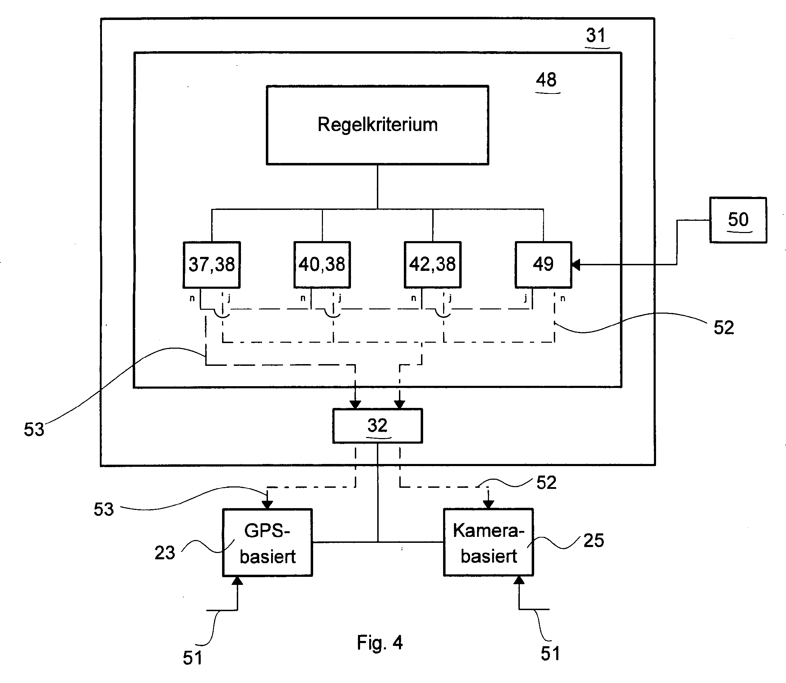

Da die Kamera-basierte Ermittlung von optischen Bezugslinien 38 in einem zu bearbeitenden Territorium 35 regelmäßig die tatsächlichen örtlichen Bedingungen auf der Fahrtroute 20 der jeweiligen landwirtschaftlichen Arbeitsmaschine 1 besser wiedergibt als dies bei GPS-basierten Fahrtroutendetektionssysteme 23 der Fall ist, ist es von Vorteil, wenn zwischen Kamera-basierten und GPS-basierten Fahrtroutendetektionssystem 23, 25 in Abhängigkeit von der Struktur des zu bearbeitenden Territoriums 35 umgeschaltet werden kann. In einem bevorzugten Ausführungsbeispiel wird diese Umschaltung zwischen den Fahrtroutendetektionssystemen 23, 25 gemäß Fig. 4 von Regelkriterien 48 abhängig gemacht. In vorliegenden Fall können die Regelkriterien entweder das Vorhandensein oder das Fehlen von optischen Bezugslinien 38, wie der Bestandskante 37, einer Fahrgasse 42 sowie von Pflanzenreihen 40 in dem zu bearbeitenden Territorium 35 oder vordefinierte Fahrtrouten 49 eines an sich bekannten und deshalb nicht näher beschriebene Routenplanungssystems 50 sein. Im einfachsten Fall wählt der Fahrer 12 der landwirtschaftlichen Arbeitsmaschine 1 selbst das geeignete Fahrtroutendetektionssystem 23, 25 durch Aktivierung 51 beispielsweise eines Aktivierungsschalters aus. In diesem Fall muss der Fahrer 12 die Struktur des zu bearbeitenden Territoriums 35 oder die Verfügbarkeit eines Routenplanungssystems 50 beurteilen. Eine den Fahrer 12 erheblich entlastende Ausgestaltung wird dann erreicht, wenn ein Datenverarbeitungssystem 31 die Regelkriterien 48 überprüft und den Controller 32 unmittelbar zur Aktivierung des geeigneten Fahrtroutendetektionssystems 23, 25 ansteuert.

In den in Fig. 2 dargestellten wesentlichen Anwendungsfällen spielt die Art und Weise der Überrollung des zu bearbeitenden Territoriums 35 nur in dem rechten Anwendungsfall eine wesentliche Rolle, da hier eine Abweichung des Schleppers 2 von einer optimalen Fahrspur 20 dazu führen kann, dass die Laufräder 13, 14 den wachsenden Bestand 41 durch Überfahren beschädigt. In diesem Anwendungsfall 52 würde der Fahrer 12 oder die Datenverarbeitungseinheit 31 dann das Kamera-basierte Fahrtroutendetektionssystem 25 auswählen, da dieses Fahrtroutendetektionssystem 25 besser die realen Bedingungen in dem zu bearbeitenden Territorium 35 wiedergibt. Gleiches gilt, wenn das erfindungsgemäße Spurführungssystem 24 nicht auf vordefinierte Fahrtrouten 49 eines Routenplanungssystems 50 zugreifen kann. Im anderen Anwendungsfall 53, nämlich dann, wenn die Überrollung des Territoriums 35 von untergeordneter Bedeutung ist 5, da eine Beschädigung des Bestandes nicht auftreten kann oder optische Bezugslinien 38 in dem zu bearbeitenden Territorium 35 nicht existieren und vordefinierte Fahrtrouten 49 verfügbar sind wird das GPS-basierte Fahrtroutendetektionssystem 23 aktiviert. Aus Vereinfachungsgründen sind in Fig. 4 beim Vorliegen der jeweiligen Bedingung die Pfade mit j für - ja - und beim Nichtvorliegen mit n für - nein - bezeichnet.

Es liegt im Rahmen der Erfindung, dass zur Erreichung einer hohen Flexibilität des erfindungsgemäßen Lenksystems der Controller 32 auch frei programmierbar ausgeführt sein kann, sodass für verschiedenste Anwendungsfälle unterschiedlichste Entscheidungskriterien 48 definiert werden können. Zudem kann der Controller 32 so ausgeführt sein, dass er zugleich die Datenverarbeitungseinrichtung 16, 27 der jeweiligen Fahrtroutendetektionssysteme 23, 25 bildet, sodass mittels eines einzigen Bauteils alle Systemfunktionen abgebildet werden können. In diesem Fall generiert der Controller 32 unmittelbar die jeweiligen Lenksignale 22, 30.

Da die elektronische Erfassung von zurückgelegten Fahrspuren 20 insbesondere für die Anlegung sogenannter historischer Datenkataster aus denen heraus zukünftig abzuarbeitende Fahrtrouten 49 generiert werden können, ist es von Vorteil, wenn bei Aktivierung des Kamera-basierten Fahrtroutendetektionssystems 25 zugleich eine Aufzeichnung der Fahrtroute 20 durch Aufzeichnung der Positionsdaten des GPS-basierten weiteren Fahrtroutendetektionssystems 23 erfolgt. Dies hat insbesondere den Vorteil, dass zukünftige Bearbeitungsprozesse auf diese, die realen Bedingungen in dem zu bearbeitenden Territorium 35 genauer wiedergebenden Fahrtrouten 49 zurückgegriffen werden kann.

Indem der Controller 32 und die Datenverarbeitungseinrichtungen 16, 27 zu einer gemeinsamen Datenverarbeitungseinrichtung 31 zusammengefasst und in die jeweilige landwirtschaftliche Arbeitsmaschine 1, 2, 33 integriert sind, kann zudem ein modularer Aufbau des erfindungsgemäßen Spurführungssystems 24 realisiert werden, der einen beliebigen Austausch der Fahrtroutendetektionssysteme 23, 25 ermöglicht.

Es liegt im Rahmen des Könnens eines Fachmanns das beschriebene Lenksystem in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Arbeitsmaschine
- 2: Schlepper
- 3: Bearbeitungsgerät
- 4: Düngerstreuer
- 5: Lenkkreislauf
- 6: Vorderachse
- 7: Hinterachse
- 8: Lenkzylinder
- 9: Lenkzylinder
- 10: Fahrzeugkabine
- 11: Lenkrad
- 12: Fahrer
- 13: Rad
- 14: Rad
- 15: GPS-Sensor
- 16: Datenverarbeitungseinrichtung
- 17: Positionssignal
- 18: GPS-Satellitensystem
- 19: Positionssignal
- 20: Fahrtroute
- 21: Soll-Fahrspur
- 22: Lenksignal
- 23: Fahrtroutendetektionssystem
- 24: Spurführungssystem
- 25: Fahrtroutendetektionssystem
- 26: Bilderkennungssystem
- 27: Datenverarbeitungseinrichtung
- 28: Bildsignal
- 29: Bild
- 30: Lenksignal
- 31: Datenverarbeitungseinrichtung
- 32: Controller
- 33: Mähdrescher
- 34: Getreideschneidwerk
- 35: Territorium
- 36: Getreidebestand
- 37: Bestandskante
- 38: optische Bezugslinie
- 39: Düngeraustrittselement
- 40: Pflanzenreihe
- 41: wachsender Bestand
- 42: Fahrgasse
- 43: 3-D-Kamera
- 44: Kamera
- 45: Pfeilrichtung
- 46: Pfeilrichtung
- 47: Ersatzspurlinie
- 48: Regelkriterium
- 49: Fahrtroute
- 50: Routenplanungssystem
- 51: Aktivierung
- 52: 1. Anwendungsfall
- 53: 2. Anwendungsfall

## Patentansprüche

1. Lenksystem eines Fahrzeugs mit Spurführungssystem zur Ermittlung einer Fahrtroute und wobei das Spurführungssystem über zumindest eine Datenverarbeitungseinrichtung eine automatische Lenkung des Fahrzeugs bewirkt,
**dadurch gekennzeichnet,**
**dass** das Spurführungssystem (24) zumindest ein erstes Fahrtroutendetektionssystem (23) und wenigstens ein weiteres Fahrtroutendetektionssystem (25) umfasst und wobei die Fahrtroutendetektionssysteme (23, 25) über zumindest eine Datenverarbeitungseinrichtung (16, 27, 31) in der Weise gekoppelt sind, dass zwischen den Fahrtroutendetektionssystemen (16, 27, 31) umgeschaltet werden kann.

2. Lenksystem eines Fahrzeugs mit Spurführungssystem nach Anspruch 1,
**dadurch gekennzeichnet**
**dass** das erste Fahrtroutendetektionssystem (23) ein GPS-basiertes Fahrtroutendetektionssystem (23) ist.

3. Lenksystem eines Fahrzeugs mit Spurführungssystem nach einem der vorhergehenden Ansprüche,
**dadurch gekennzeichnet,**
**dass** das zweite Fahrtroutendetektionssystem (25) ein Kamera-basiertes Fahrtroutendetektionssystem (25) ist.

4. Lenksystem eines Fahrzeugs mit Spurführungssystem nach Anspruch 3,
**dadurch gekennzeichnet**
**dass** die Kamera als 3-D-Kamera (43) ausgebildet ist.

5. Lenksystem eines Fahrzeugs mit Spurführungssystem nach einem der vorhergehenden Ansprüche,
**dadurch gekennzeichnet,**
**dass** die 3-D-Kamera (43) aus einem winkelversetzt angeordnetem Zwei-Kamera-System (44) oder einer 2-D-Kamera (44) mit Laufzeitmessung gebildet wird.

6. Lenksystem eines Fahrzeugs mit Spurführungssystem nach einem der vorhergehenden Ansprüche,
**dadurch gekennzeichnet,**
**dass** an Hand von Regelkriterien (48) und/oder durch den Betreiber (12) ein Umschalten zwischen den Fahrtroutendetektionssystemen (23, 25) erfolgt.

7. Lenksystem eines Fahrzeugs mit Spurführungssystem nach Anspruch 4,
**dadurch gekennzeichnet,**
**dass** das Regelkriterium (48) das Vorhandensein oder Fehlen von optischen Bezugslinien (38) in dem zu bearbeitenden Territorium (35) umfasst.

8. Lenksystem eines Fahrzeugs mit Spurführungssystem nach einem der Ansprüche 6 - 7,
**dadurch gekennzeichnet,**
**dass** die optischen Bezugslinien (38) von Fahrgassen (42) und/oder Pflanzenreihen (40) und/oder Bestandskanten (37) gebildet werden.

9. Lenksystem eines Fahrzeugs mit Spurführungssystem nach einem der Ansprüche 6 - 8,
**dadurch gekennzeichnet,**
**dass** beim Vorhandensein von optischen Bezugslinien (38) und/oder dem Fehlen digitalisierter Fahrtrouten (49) in dem zu bearbeitenden Territorium (35) das Spurführungssystem (24) über das die Kamera (43) umfassende Fahrtroutendetektionssystem (25) betrieben wird.

10. Lenksystem eines Fahrzeugs mit Spurführungssystem nach einem der Ansprüche 6 - 8,
**dadurch gekennzeichnet,**
**dass** beim Fehlen von optischen Bezugslinien (38) und/oder der Verfügbarkeit von digitalisierten Fahrtrouten (49) in dem zu bearbeitenden Territorium (35) das Spurführungssystem (24) über das GPS-basierte Fahrtroutendetektionssystem (23) betrieben wird.

11. Lenksystem eines Fahrzeugs mit Spurführungssystem nach einem der vorhergehenden Ansprüche,
**dadurch gekennzeichnet,**
**dass** das GPS-basierte Fahrtroutendetektionssystem (23) und das die Kamera (43) umfassende Fahrtroutendetektionssystem (25) über einen Controller (32) miteinander verknüpft sind und der Controller (32) die Fahrtroutendetektionssysteme (23, 25) mit einem Lenkkreislauf (5) verknüpft.

12. Lenksystem eines Fahrzeugs mit Spurführungssystem nach einem der vorhergehenden Ansprüche,
**dadurch gekennzeichnet,**
**dass** der Controller (32) programmierbar ist und die Regelkriterien (48) zur Auswahl des Fahrtroutendetektionssystems (23, 25) definiert.

13. Lenksystem eines Fahrzeugs mit Spurführungssystem nach einem der vorhergehenden Ansprüche,
**dadurch gekennzeichnet,**
**dass** der Controller (32) aus den Ausgangssignalen (19, 29) der Fahrtroutendetektionssysteme (23, 25) die Lenksignale (22, 30) für den Lenkkreislauf (5) generiert.

14. Lenksystem eines Fahrzeugs mit Spurführungssystem nach einem der vorhergehenden Ansprüche,
**dadurch gekennzeichnet,**
**dass** das Kamera-basierte Fahrtroutendetektionssystem (25) mit dem GPS-basierten Fahrtroutendetektionssystem (23) in der Weise verknüpft ist, dass beim Betrieb des Fahrzeugs (1) mittels des Kamera-basierten Fahrtroutendetektionssystems (25) eine geo-referenzierte Aufzeichnung der Fahrtroute (20) unter Einbeziehung des GPS-basierten Fahrtroutendetektionssystem (23) erfolgt.

15. Lenksystem eines Fahrzeugs mit Spurführungssystem nach einem der vorhergehenden Ansprüche,
**dadurch gekennzeichnet,**
**dass** das Spurführungssystem (24) modular aufgebaut ist und die Fahrtroutendetektionssysteme (23, 25) austauschbar in das Spurführungssystem (24) integriert sind.
